# EUROPÄISCHE PATENTANMELDUNG

(11) **EP 4 340 153 A1**
(43) Veröffentlichungstag der Anmeldung: **20.03.2024**
(21) Anmeldenummer: 22195504.0
(22) Anmeldetag: 14.09.2022
(51) Int. Cl.: H02J 3/04, H02J 4/00

(54) **NETZKOPPELVORRICHTUNG ZUM KOPPELN EINES ÖFFENTLICHEN STROMNETZES MIT EINEM LOKALEN STROMNETZ**

(71) Anmelder: enwitec electronic GmbH, 84329 Rogglfing (DE)
(72) Erfinder: Wimmer, Johann, 84329 Rogglfing (DE)
(74) Vertreter: Rothkopf, Ferdinand

(57) **Zusammenfassung**

Eine Netzkoppelvorrichtung zum Koppeln eines mit Wechselstrom betriebenen öffentlichen Stromnetzes mit einem ebenfalls mit Wechselstrom betriebenen lokalen Stromnetz gelöst, ist erfindungsgemäß mit einem Gleichstromzwischenkreis gestaltet ist.

## Beschreibung

### Hintergrund der Erfindung

Die Erfindung betrifft eine Netzkoppelvorrichtung zum Koppeln eines mit Wechselstrom betriebenen öffentlichen Stromnetzes mit einem ebenfalls mit Wechselstrom betriebenen lokalen Stromnetz.

Unter dem Begriff "öffentliches Stromnetz", welches auch als "Anbieter-Stromnetz" oder "Fremd-Stromnetz" bezeichnet werden könnte, wird vorliegend ein Stromnetz verstanden bei dem von einem Stromversorger bzw. Stromanbieter, insbesondere aber nicht ausschließlich in öffentlicher Weise, an einen lokalen Verbraucher elektrischer Strom angeboten und geliefert wird.

Das "lokale Stromnetz", welches auch als Abnehmer-Stromnetz" oder "Eigen-Stromnetz" bezeichnet werden könnte, ist demgegenüber erheblich kleiner gestaltet. Hier relevante lokale Stromnetze weisen einen Anschluss-Leistungsbedarf von zwischen 5 und 1000 Kilowatt (kW), insbesondere zwischen 10 und 500 kW, auf.

Öffentliche Stromnetze werden dazu verwendet, um von einem oder mehreren, weitgehend zentralen Stromversorgern, wie beispielsweise Kraftwerken, kleinere oder auch größere lokale Stromnetze mit elektrischem Strom zu versorgen. Der elektrische Strom wird am lokalen Stromnetz gewöhnlich als Wechselstrom, insbesondere mit einer Spannung von zwischen 200 und 1000 Volt (V), insbesondere ca. 230 V oder 400 V, und einer Frequenz von zwischen 20 und 100 Hertz (Hz), insbesondere ca. 50 Hz oder 60 Hz, bereitgestellt. Das jeweilige lokale Stromnetz umfasst gewöhnlich eine oder mehrere Wohn- oder Gewerbeeinheiten. Die hier relevanten lokalen Stromnetze weisen in der Regel einen Gesamtstromverbrauch pro Tag von zwischen 20 und 1000 Kilowattstunden (kWh) auf, insbesondere von ca. 100 bis 500 kWh. Die Anschlussleistung der hier relevanten lokalen Stromnetze beträgt zwischen 5 und 500 kW, insbesondere auch wegen der nachfolgend genannten, erfindungsgemäßen Lösung nur 10 bis 100 kW.

Zum Anschluss von lokalen Stromnetzen an öffentlichen Stromnetzen muss sichergestellt sein, dass von dem lokalen Stromnetz ausschließlich elektrischer Strom aus dem öffentlichen Stromnetz heraus abgenommen, nicht aber elektrischer Strom in das öffentliche Stromnetz hinein eingespeist wird. Für eine Einspeisung von elektrischem Strom in ein öffentlichen Stromnetz gelten besondere Bedingungen und auch technische Voraussetzungen, die von herkömmlichen lokalen Stromnetzen in der Regel nicht erfüllt werden.

Sobald bei einem lokalen Stromnetz aber Stromerzeuger-Anlagen oder Stromspeicher-Anlagen, wie etwa eine Photovoltaik-Anlage oder eine Batterie-Anlage integriert sind, kann nicht unmittelbar oder nur mit größerem technischen Aufwand sichergestellt werden, dass der dort erzeugte oder gespeicherte Strom nicht auch zurück in das öffentliche Stromnetz fließen könnte. Der Funktionsumfang von lokalen Stromnetzen ohne eine solche aufwändige Absicherung ist daher derzeit begrenzt.

### Zugrundeliegende Aufgabe

Der Erfindung liegt die Aufgabe zugrunde, lokale Stromnetze zu schaffen, deren Funktionsumfang im Vergleich zu bekannten lokalen Stromnetzen vergrößert und flexibler bzw. vielseitiger gestaltet ist.

### Erfindungsgemäße Lösung

Diese Aufgabe ist erfindungsgemäß mit einer Netzkoppelvorrichtung zum Koppeln eines mit Wechselstrom betriebenen öffentlichen Stromnetzes mit einem ebenfalls mit Wechselstrom betriebenen lokalen Stromnetz gelöst, bei der die Netzkoppelvorrichtung mit einem Gleichstromzwischenkreis gestaltet ist.

Mit der erfindungsgemäßen Lösung ist gewährleistet, dass ein Stromfluss nur vom öffentlichen Stromnetz in Richtung zum lokalen Stromnetz möglich ist. Es ist damit zugleich einfach und absolut funktionssicher gewährleistet, dass aus dem lokalen Stromnetz kein Strom in das öffentliche Stromnetz eingespeist werden kann.

### Vorteilhafte Weiterbildungen der Erfindung

Bei einer vorteilhaften Weiterbildung der Erfindung ist der Wechselstrom-Gleichstrom-Wandler mit einem handelsüblichen Ladegerät gestaltet. Solche Ladegeräte sind technologisch ausentwickelt, sie sind kostengünstig und betriebssicher. Sie kommen bei insbesondere großen, klassischen Gleichstrom-Verbrauchern bereits millionenfach zum Einsatz.

Ferner ist vorzugsweise bei der erfindungemäßen Netzkoppelvorrichtung der Gleichstrom-Wechselstrom-Wandler mit einem handelsüblichen Wechselrichter gestaltet. Auch solche Wechselrichter kommen heute bereits millionenfach zum Einsatz. Sie werden insbesondere für den Anschluss und Betrieb von großen, klassischen Photovoltaik-Anlagen genutzt.

Das lokale Stromnetz ist bevorzugt zum öffentlichen Stromnetz hin mit einem Anschluss-Stromzähler versehen.

In vorteilhafter Weise ist ferner das lokale Stromnetz zum öffentlichen Stromnetz hin mit einer Anschluss-Sicherung versehen.

Das lokale Stromnetz ist ferner vorteilhaft mit mindestens einer regenerativen Stromerzeuger-Anlage versehen.

Die regenerative Stromerzeuger-Anlage ist bevorzugt mit mindestens einer Kraft-Wärme-Kopplung-Anlage und/oder einer Photovoltaik-Anlage gestaltet.

Die mindestens eine Photovoltaik-Anlage wird insbesondere vorteilhaft mit Gleichstrom betrieben. Sie ist dabei über mindestens einen Wechselrichter an das selbst mit Wechselstrom betriebene lokale Netzwerk angekoppelt. Diese Ankopplung an das lokale Stromnetz ist hinsichtlich der oben genannten weiteren Kopplung an das öffentliche Stromnetz vorliegend unproblematisch, weil das lokale Stromnetz nicht direkt, sondern wie erläutert mittels des erfindungsgemäßen Gleichstromzwischenkreises an das öffentliche Stromnetz angeschlossen ist.

Das lokale Stromnetz ist alternativ oder zusätzlich vorzugsweise mit mindestens einer Stromspeicher-Anlage versehen. Die mindestens eine Stromspeicher-Anlage wird ebenfalls vorteilhaft mit Gleichstrom betrieben und ist über einen Wechselrichter zum Aufnehmen von Strom aus dem lokalen Stromnetz und Abgeben von Strom in das lokale Stromnetz an dieses angeschlossen. Diese Ankopplung an das lokale Stromnetz ist wie erläutert hinsichtlich der oben genannten weiteren Kopplung an das öffentliche Stromnetz ebenfalls unproblematisch.

Schließlich ist bei der erfindungsgemäßen Netzkoppelvorrichtung in vorteilhafter Weise das lokale Stromnetz mit mindestens einem steuerbaren Stromverbraucher versehen. Dieser mindestens eine Stromverbraucher wird in herkömmlicher Weise insbesondere mit Wechselstrom betrieben.

### Kurzbeschreibung der Zeichnung

Nachfolgend wird ein Ausführungsbeispiel der erfindungsgemäßen Lösung anhand der beigefügten schematischen Zeichnungen näher erläutert. Es zeigt:

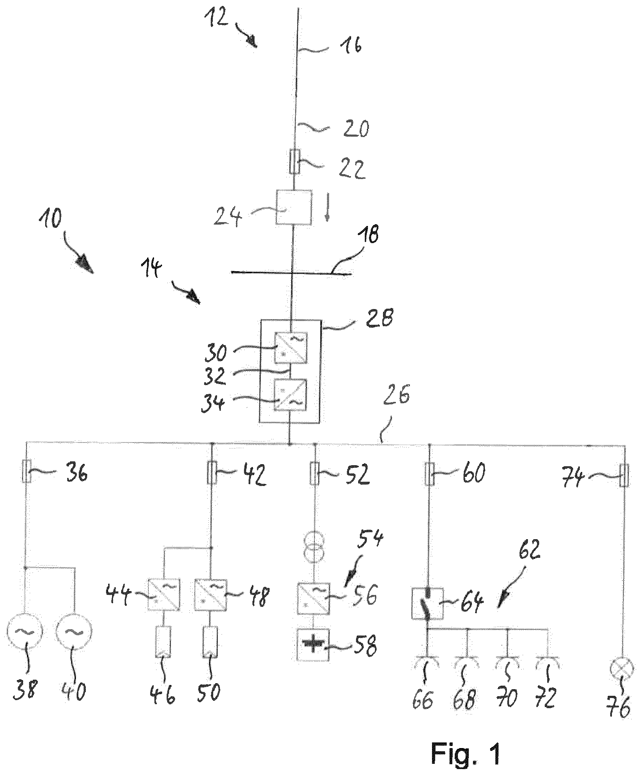

Fig. 1 einen Stromlaufplan an einem Ausführungsbeispiel einer erfindungsgemäßen Netzkoppelvorrichtung.

### Detaillierte Beschreibung des Ausführungsbeispiels

In Fig. 1 ist eine Netzkoppelvorrichtung 10 gezeigt, die zwischen ein öffentliches Stromnetz 12 und ein lokales Stromnetz 14 geschaltet ist. Das öffentliche Stromnetz 12 umfasst eine Leitung 16 zum Bereitstellen von Wechselstrom, vorliegend mit einer Spannung von 230 V und einer Frequenz von 50 Hz. In der Leitung 16 ist eine Anschluss-Sicherung 22 sowie in Leitungsrichtung danach oder auch davor ein Anschluss-Stromzähler 24 positioniert.

Die Leitung 16 geht an einer Versorgungsgrenze bzw. Eigentumsgrenze 18 in einen ersten Leitungsteil 20 des lokalen Stromnetzes 14 über.

Auf den ersten Leitungsteil 20 folgt ein zweiter Leitungsteil 26 des lokalen Stromnetzes 14, wobei stromleitend zwischen dem Leitungsteil 20 und dem Leitungsteil 26 ein Gleichstromzwischenkreis 28 angeordnet ist, mittels dem auf einfache Weise sichergestellt ist, dass elektrischer Strom aus dem ersten Leitungsteil 20 in den zweiten Leitungsteil 26 strömen kann, nicht aber aus dem zweiten Leitungsteil 26 zurück in den ersten Leitungsteil 20.

Der Gleichstromzwischenkreis 28 ist mit einem Wechselstrom-Gleichstrom-Wandler 30, der an dem ersten Leitungsteil 20 angeschlossen ist, einer an dem Wechselstrom-Gleichstrom-Wandler 30 angeschlossenen Zwischenleitung 32 sowie einem daran angeschlossenen Gleichstrom-Wechselstrom-Wandler 34 gestaltet. An dem Gleichstrom-Wechselstrom-Wandler 34 ist dann der zweite Leitungsteil 26 angeschlossen.

Der zweite Leitungsteil 26 ist weiter aufgezweigt und es befindet sich darin eine erste Sicherung 36, an der eine erste Kraft-Wärme-Kopplung-Anlage 38 sowie eine zweite Kraft-Wärme-Kopplung-Anlage 40 mit je einer Leistung von z.B. 2 bis 10 kW in paralleler Anordnung angeschlossen sind.

In einem weiteren Zweig des zweiten Leitungsteils 26 sind hinter einer zweiten Sicherung 42 ein erster Photovoltaik-Wechselrichter 44 mit einer ersten Photovoltaik-Anlage 46 mit einer Leistung von z.B. 10 Kilowatt-Peak (kWp) bis 50 kWp sowie ein zweiter Photovoltaik-Wechselrichter 48 mit einer zweiten Photovoltaik-Anlage 50 mit einer Leistung von z.B. 100 kWp bis 500 kWp in ebenfalls paralleler Anordnung angeschlossen.

In einem dritten Zweig des zweiten Leitungsteils 26 befindet sich hinter einer dritten Sicherung 52 eine Stromspeicher-Anlage 54. Diese Stromspeicher-Anlage 54 ist insbesondere mit einem Wechselrichter 56 sowie einer Batterie 58 mit z.B. einer Speicherkapazität von 5 kWh bis 500 kWh, insbesondere von 50 kWh bis 200 kWh gestaltet.

Ein vierter Zweig des zweiten Leitungsteils 26 umfasst eine vierte Sicherung 60, an der mehrere steuerbare Stromverbraucher 62, wie z.B. Ladesäulen für Personenkraftwagen, angeschlossen sind. Dabei befinden sich hinter einer Steuerung 64 ein erster Verbraucherteil 66, ein zweiter Verbraucherteil 68, ein dritter Verbraucherteil 70 sowie ein vierter Verbraucherteil 72.

Schließlich sind am zweiten Leitungsteil 26 auch noch weitere Zweige möglich, wobei hier beispielhaft noch an einer fünften Sicherung 74 ein sonstiger Stromverbraucher 76 gezeigt ist.

Abschließend sei angemerkt, dass sämtlichen Merkmalen, die in den Anmeldungsunterlagen und insbesondere in den abhängigen Ansprüchen genannt sind, trotz des vorgenommenen formalen Rückbezugs auf einen oder mehrere bestimmte Ansprüche, auch einzeln oder in beliebiger Kombination eigenständiger Schutz zukommen soll.

### Bezugszeichenliste

- 10: Netzkoppelvorrichtung
- 12: öffentliches Stromnetz
- 14: lokales Stromnetz
- 16: Leitung des öffentlichen Stromnetzes für Wechselstrom
- 18: Eigentumsgrenze
- 20: erster Leitungsteil des lokalen Stromnetzes für Wechselstrom
- 22: Anschluss-Sicherung
- 24: Anschluss-Stromzähler
- 26: zweiter Leitungsteil des lokalen Stromnetzes für Wechselstrom
- 28: Gleichstromzwischenkreis
- 30: Wechselstrom-Gleichstrom-Wandler
- 32: Zwischenleitung
- 34: Gleichstrom-Wechselstrom-Wandler
- 36: erste Sicherung
- 38: erste Kraft-Wärme-Kopplung-Anlage
- 40: zweite Kraft-Wärme-Kopplung-Anlage
- 42: zweite Sicherung
- 44: erster Photovoltaik-Wechselrichter
- 46: erste Photovoltaik-Anlage
- 48: zweiter Photovoltaik-Wechselrichter
- 50: zweite Photovoltaik-Anlage
- 52: dritte Sicherung
- 54: Stromspeicher-Anlage
- 56: Wechsel/Gleichrichter
- 58: Batterie
- 60: vierte Sicherung
- 62: steuerbarer Stromverbraucher
- 64: Steuerung
- 66: erster Verbraucherteil
- 68: zweiter Verbraucherteil
- 70: dritter Verbraucherteil
- 72: vierter Verbraucherteil
- 74: fünfte Sicherung
- 76: sonstiger Stromverbraucher

## Patentansprüche

1. Netzkoppelvorrichtung (10) zum Koppeln eines mit Wechselstrom betriebenen öffentlichen Stromnetzes (12) von einem ebenfalls mit Wechselstrom betriebenen lokalen Stromnetz (14),
**dadurch gekennzeichnet, dass** die Netzkoppelvorrichtung (10) mit einem Gleichstromzwischenkreis (28) gestaltet ist.

2. Netzkoppelvorrichtung nach Anspruch 1,
**dadurch gekennzeichnet, dass** der Gleichstromzwischenkreis (28) mit einem Wechselstrom-Gleichstrom-Wandler (30) und einem Gleichstrom-Wechselstrom-Wandler (34) gestaltet ist.

3. Netzkoppelvorrichtung nach Anspruch 2,
**dadurch gekennzeichnet, dass** der Wechselstrom-Gleichstrom-Wandler (30) mit einem handelsüblichen Ladegerät gestaltet ist.

4. Netzkoppelvorrichtung nach Anspruch 2 oder 3,
**dadurch gekennzeichnet, dass** der Gleichstrom-Wechselstrom-Wandler (34) mit einem handelsüblichen Wechselrichter gestaltet ist.

5. Netzkoppelvorrichtung nach einem der Ansprüche 1 bis 4,
**dadurch gekennzeichnet, dass** das lokale Stromnetz (14) zum öffentlichen Stromnetz (12) hin mit einem Anschluss-Stromzähler (24) versehen ist.

6. Netzkoppelvorrichtung nach einem der Ansprüche 1 bis 5,
**dadurch gekennzeichnet, dass** das lokale Stromnetz (14) zum öffentlichen Stromnetz (12) hin mit einer Anschluss-Sicherung (22) versehen ist.

7. Netzkoppelvorrichtung nach einem der Ansprüche 1 bis 6,
**dadurch gekennzeichnet, dass** das lokale Stromnetz (14) mit mindestens einer regenerativen Stromerzeuger-Anlage versehen ist.

8. Netzkoppelvorrichtung nach Anspruch 7,
**dadurch gekennzeichnet, dass** die regenerative Stromerzeuger-Anlage mit einer Kraft-Wärme-Kopplung-Anlage (38; 40) und/oder einer Photovoltaik-Anlage (46; 50) gestaltet ist.

9. Netzkoppelvorrichtung nach einem der Ansprüche 1 bis 8,
**dadurch gekennzeichnet, dass** das lokale Stromnetz (14) mit mindestens einer Stromspeicher-Anlage (54) versehen ist.

10. Netzkoppelvorrichtung nach einem der Ansprüche 1 bis 9,
**dadurch gekennzeichnet, dass** das lokale Stromnetz (14) mit mindestens einem steuerbaren Stromverbraucher (62) versehen ist.
